# EUROPEAN PATENT APPLICATION

(11) **EP 3 355 399 A1**
(43) Date of publication of application: **01.08.2018**
(21) Application number: 16848915.1
(22) Date of filing: 21.09.2016
(51) Int. Cl.: H01M 8/0444, H01M 8/04537, H01M 8/18

(54) **METHOD FOR CONTROLLING OPERATION OF CHEMICAL FLOW BATTERY**

(30) Priority: 23.09.2015 KR 20150134974
(71) Applicant: Lotte Chemical Corporation, Seoul, 05551 (KR)
(72) Inventor: CHOI, Eun Mi, Daejeon 34120 (KR); BAE, Suyeon, Daejeon 34120 (KR); KIM, Dae-Sik, Daejeon 35367 (KR)
(74) Representative: Agasse, Stéphane
(86) International application number: PCT/KR2016/010528
(87) International publication number: WO 2017/052189

(57) **Abstract**

A method for controlling driving of a chemical flow battery is disclosed. The method includes: measuring a concentration of bromine (Br2) in an electrolyte solution of a chemical flow battery after a complete discharge; and additionally supplying bromine (Br2) into the electrolyte solution until the concentration of bromine (Br2) satisfies a predefined condition.

## Description

### CROSS-REFERENCE TO RELATED APPLICATION

This application claims priority to and the benefit of Korean Patent Application No. 10-2015-0134974 filed in the Korean Intellectual Property Office on September 23, 2015, the entire contents of which are incorporated herein by reference.

### BACKGROUND OF THE INVENTION

### (a) Field of the Invention

The present invention relates to a method for controlling driving of a chemical flow battery.

### (b) Description of the Related Art

As existing electric generator systems such as one for thermal power generation that causes a huge amount of greenhouse gas and environmental contamination problems by use of fossil fuels and one for nuclear power generation having problems of stability of the system and waste disposal have various limits, studies regarding development of energy that is more environmentally friendly and has high efficiency and development of power supply systems using the same are substantially increasing.

Particularly, power storage technologies using renewable energy that is particularly influenced by external conditions in wider and more various ways and increasing the efficiency of the use of electric power are gaining interest, so there is a focus on development of such technologies, and from among them, interest in and research and development on rechargeable batteries are substantially increasing.

A chemical flow battery is an oxidation-reduction cell for directly converting chemical energy of an active material to electrical energy, and it represents an energy storage system for storing new and renewable energy of which output variations are large depending on the external environment such as sunlight or wind power, and changing the same into high-quality electric power. In detail, regarding the chemical flow battery, an electrolyte solution including an active material generating an oxidation/reduction reaction circulates between an opposite electrode and a storage tank to generate charging and discharging.

The chemical flow battery basically includes a tank storing active materials with different oxidation states, a pump for circulating the active material during charging and discharging, and a unit cell divided by a separation film, and the unit cell includes an electrode, an electrolyte, a current collector, and a separation film.

Performance of the chemical flow battery indicates efficiency and capacity of the battery. When an open circuit voltage (OCV) of the chemical flow battery is equal to or greater than 0.1 V/cell after complete discharging of the chemical flow battery, it means that a non-reactive material remains in the electrode, so a side reaction and self-discharging may be generated in a following cycle and performance of the chemical flow battery may be deteriorated.

This is because, when the non-reactive material is not removed, a zinc dendrite may be formed and performance of the battery may be reduced because of an increase of the pH of the electrolyte solution and a reduction of a reacting active material. Therefore, a method for removing the non-reactive material in the electrode to increase a reaction area of the electrode, improve performance of the chemical flow battery, and manage the chemical flow battery in a stable manner is very important.

U.S. Patent US5650239B1 discloses, as a technique for restoring a performance-deteriorated electrode during charging and discharging, applying a reverse current for restoring performance of the battery by applying a current in an opposite direction to a current flowing direction during a charging process. However, after the charging and discharging are performed, the battery may be damaged because of the application of a reverse current, and no current amount and time are mentioned.

U.S. Patent US4691158B1 discloses a technique for applying a pulse before and after charging and discharging so as to control a zinc dendrite and remove zinc remaining in the anode electrode.

However, it is difficult to apply a large pulse to the battery system and the charging and discharging apparatus, and a time for applying a pulse is long, so the total time for managing the battery increases and the efficiency of managing the battery is deteriorated.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a method for controlling driving of a chemical flow battery for restoring performance of a chemical flow battery by adding bromine (Br2) when efficiency and capacity of the chemical flow battery is deteriorated because of self-discharge, side reactions, and reduction of a reaction area in an electrode.

An exemplary embodiment of the present invention provides a method for controlling driving of a chemical flow battery, including: measuring a concentration of bromine (Br2) in an electrolyte solution of a chemical flow battery after a complete discharge; and additionally supplying bromine (Br2) into the electrolyte solution until the concentration of bromine (Br2) satisfies a predefined condition.

The supplying may include additionally supplying the bromine (Br2) until the concentration of bromine (Br2) becomes to be equal to or greater than 0.05 M and equal to or less than 0.2 M.

The chemical flow battery may include a zinc-bromine (Br2) redox flow battery.

Another embodiment of the present invention provides a method for controlling driving of a chemical flow battery, including: measuring an open circuit voltage (OCV) of an electrolyte solution of a chemical flow battery after discharging; measuring a concentration of bromine (Br2) in the electrolyte solution; and additionally supplying bromine (Br2) into the electrolyte solution when the open circuit voltage (OCV) is less than a predefined voltage reference value and the concentration of bromine (Br2) is less than a predefined concentration reference value.

The supplying may include additionally supplying the bromine (Br2) when the open circuit voltage (OCV) is less than 0.1 V/cell and the concentration of bromine (Br2) is less than 0.05 M.

Yet another embodiment of the present invention provides a method for controlling driving of a chemical flow battery, including: measuring an open circuit voltage (OCV) of an electrolyte solution of a chemical flow battery after discharging; measuring a concentration of bromine (Br2) in the electrolyte solution; and additionally supplying bromine (Br2) into the electrolyte solution when the open circuit voltage (OCV) is equal to or greater than a predefined voltage reference value and the concentration of bromine (Br2) is less than a concentration reference value.

The supplying may include additionally supplying the bromine (Br2) when the open circuit voltage (OCV) is equal to or greater than 0.1 V/cell and the concentration of bromine (Br2) is less than 0.05 M.

The method may further include, after the supplying: performing multi-step low-current discharging; measuring an open circuit voltage (OCV) of an electrolyte solution of the chemical flow battery; measuring a concentration of bromine (Br2) in the electrolyte solution; and applying a reverse current when the open circuit voltage (OCV) is equal to or greater than a predefined voltage reference value and the concentration of bromine (Br2) is equal to or greater than a predefined concentration reference value.

The applying of a reverse current may include applying the reverse current when the open circuit voltage (OCV) is equal to or greater than 0.1 V/cell and the concentration of bromine (Br2) is equal to or greater than 0.2 M.

The method may further include, after the applying of a reverse current: performing multi-step low-current discharging; measuring an open circuit voltage (OCV) in an electrolyte solution of the chemical flow battery; determining whether the open circuit voltage (OCV) is equal to or less than a predefined voltage reference value; performing the applying of a reverse current when the open circuit voltage (OCV) is not equal to or less than the predefined voltage reference value; and finishing the step when the open circuit voltage (OCV) is equal to or less than the predefined voltage reference value.

The determining whether the open circuit voltage (OCV) is equal to or less than a predefined voltage reference value may include determining whether the open circuit voltage (OCV) is equal to or less than 0.1 V/cell.

The performing of multi-step current discharging may include establishing a current level range of the multi-step low-current discharge to be equal to or greater than 0.1 % and equal to or less than 50 % of a charging and discharging current range.

The applying of a reverse current may include applying a reverse current so that a current level range may be equal to or greater than 1 mAh/cm2 and equal to or less than 5 mAh/cm2 and a state of charge (SOC) may be equal to or greater than 5 and equal to or less than 15.

The chemical flow battery may include a zinc-bromine (Br2) redox flow battery.

According to the exemplary embodiment of the present invention, the non-reactive material remaining in the electrode is removed to increase the reaction area of the electrode, and the zinc dendrite is removed to increase stability of the chemical flow battery and recover performance of the chemical flow battery.

Further, the multi-step low-current discharge (stripping), the addition of bromine (Br2), and the management method of the multi-step low-current discharge (stripping) after applying the reverse current may change the driving method and the condition depending on the state of the battery to remove the non-reactive material remaining in the electrode and increase the reaction area of the electrode, and remove the zinc dendrite to increase the stability of the battery.

### BRIEF DESCRIPTION OF THE DRAWINGS

FIG. 1 shows a block diagram of a configuration of a driving control device of a chemical flow battery according to an exemplary embodiment of the present invention.
FIG. 2 shows a flowchart of a driving control method of a chemical flow battery according to an exemplary embodiment of the present invention.
FIG. 3 shows a flowchart of a driving control method of a chemical flow battery according to another exemplary embodiment of the present invention.
FIG. 4 shows a flowchart of a driving control method of a chemical flow battery according to the other exemplary embodiment of the present invention.
FIG. 5 shows a graph of estimation of performance of a battery depending on whether bromine (Br2) is provided in an electrolyte solution according to an exemplary embodiment of the present invention.
FIG. 6 and FIG. 7 show microscope photographs of after charging and discharging by use of an electrolyte solution without bromine (Br2) according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Unless explicitly described to the contrary, the word "comprise" and variations such as "comprises" or "comprising" will be understood to imply the inclusion of stated elements but not the exclusion of any other elements.

The terms "-er", "-or", and "module" described in the specification mean units for processing at least one function and operation, and can be implemented by hardware components or software components and combinations thereof.

A driving control method of a chemical flow battery according to an exemplary embodiment of the present invention will now be described with reference to accompanying drawings.

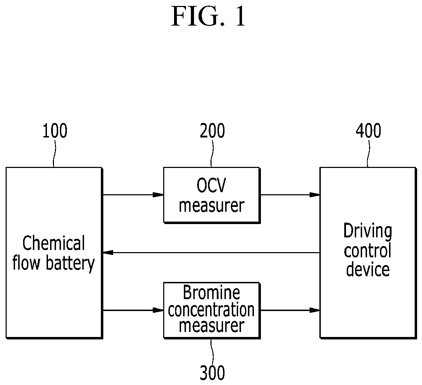

FIG. 1 shows a block diagram of a configuration of a driving control device of a chemical flow battery according to an exemplary embodiment of the present invention.

Referring to FIG. 1, the chemical flow battery 100 is an oxidation-reduction cell for switching chemical energy of an active material to electrical energy.

In detail, in the chemical flow battery, an electrolyte solution including an active material generating an oxidation/reduction reaction circulates between an opposite electrode and a storage tank to perform charging and discharging. Although not shown, the chemical flow battery 100 includes: a tank for storing active materials with different oxidation states, a pump for circulating the active materials at the time of charging and discharging, and a unit cell divided by a separation film, and the unit cell includes an electrode, an electrolyte, a current collector, and a separation film. Here, the chemical flow battery 100 may be a zinc-bromine (Br2) redox flow battery.

An open circuit voltage (OCV) measurer 200 measures an open circuit voltage (OCV) after the chemical flow battery 100 is discharged, and it transmits the measured voltage to a driving control device 400.

A bromine (Br2) concentration measurer 300 measures a concentration of bromine (Br2) in the electrolyte solution of the chemical flow battery 100, and transmits the measured concentration to the driving control device 400 after the chemical flow battery 100 is discharged.

The driving control device 400 adds bromine (Br2) to the electrolyte solution to restore performance of the chemical flow battery 100 when performance and capacity of the chemical flow battery 100 are deteriorated.

The driving control device 400 may perform multi-step low-current discharging (stripping), addition of bromine (Br2), and multi-step low-current discharging (stripping) after a reverse current is applied. In this instance, the driving method and conditions may be changed according to the state of the chemical flow battery 100 to remove the non-reactive material remaining in the electrode and increase the reaction area of the electrode, and the zinc dendrite may be removed to increase stability of the battery.

It is preferable for the driving control device 400 to maintain the concentration of bromine (Br2) to be equal to or greater than 0.05 M and equal to or less than 0.2 M in the electrolyte solution in the case of the completely discharged (SOC=0) electrolyte solution. It is preferable for the open circuit voltage (OCV) after discharging to be less than 0.1 V per unit cell.

When the electrolyte solution of the chemical flow battery 100 includes bromine (Br2), charging and discharging efficiency and long-term cycle performance are superior to the case in which the same includes no bromine (Br2), and the non-reactive material remaining in the anode after the chemical flow battery 100 is discharged is removed. However, the bromine (Br2) has a low vapor pressure so it is easily gasified, and it may be easily gasified when a complexing agent and bromine (Br2) produced during charging are not combined to each other immediately.

As the chemical flow battery 100 is charged and discharged, a temperature inside a stack and a temperature of the electrolyte solution increase, so free bromine (Br2) and the bromine (Br2) combined with the complexing agent may have a weak combination force and may be gasified.

It is very important, after the chemical flow battery 100 is charged and discharged, to measure the open circuit voltage (OCV) and determine whether there is a non-reactive material remaining in the electrode and whether the electrolyte solution includes bromine (Br2). When the bromine (Br2) in the electrolyte solution is exhausted and no longer remains, the driving control device 400 may add bromine (Br2) to the electrolyte solution and may perform charging and discharging.

When the open circuit voltage (OCV) of the completely discharged chemical flow battery is less than 0.1 V/cell, the driving control device 400 determines that there is no non-reactive material in the electrode. When the non-reactive material remains in the electrode, the open circuit voltage (OCV) after a complete discharge is indicated to be equal to or greater than 0.1 V/cell.

The multi-step low-current discharge is a concept that is like stripping, and it represents a method for removing the non-reactive material remaining in the electrode by applying a current that is less than the charging and discharging current in a stepwise manner. In this instance, the current level is changed to a low current from a high current to reduce the cell voltage to 0 volts.

The driving control device 400 may establish the multi-step low-current discharge as a set, and may repeat the same multiple times. A range of the current level of the multi-step low-current discharge may be set to be 0.1-50 % of the charging and discharging current range.

To remove the non-reactive material by adding bromine (Br2), the driving control device 400 performs multi-step low-current discharging (stripping), and when the open circuit voltage (OCV) of the chemical flow battery 100 is equal to or greater than 0.1 V/cell and a residue of zinc remains in the anode, it adds bromine (Br2) to the electrolyte solution to remove the residue of zinc. The residue of zinc and the bromine (Br2) generate a reaction to form zinc-bromine (ZnBr2) which may work as a reacting active material. The bromine (Br2) added to an aqueous electrolyte solution shows an effect of reducing pH of the electrolyte solution through the following reaction formula.

Br2 + 2H2O ↔ 2H+ + 2HBrO

After multi-step low-current discharging and addition of bromine (Br2), the driving control device 400 removes the non-reactive material by applying a reverse current when the open circuit voltage (OCV) of the chemical flow battery 100 is maintained to be equal to or greater than 0.1 V/cell. Here, the method for applying a reverse current represents a method for removing bromine (Br2) adsorbed in the activation layer of the cathode when the non-reactive material remaining in the electrode is not removed by multi-step low-current discharge and addition of bromine (Br2).

The method for applying a reverse current is to produce zinc in the cathode and allow zinc and bromine (Br2) to react by applying a current that is opposite to a current flow direction of the existing charging process.

When applying the reverse current, the preferable current level range is equal to or greater than 1 mAh/cm2 and equal to or less than 5 mAh/cm2, and the preferable state of charge (SOC) is equal to or greater than 5 and equal to or less than 15. The above-noted range is a condition for removing the non-reactive material remaining in the electrode and minimizing the damage of the electrode.

The driving control device 400, after the reverse current is applied, changes the current direction to the previous direction and performs multi-step low-current discharging so that the cell voltage may become 0.1 V/cell. When the reverse current is applied and the current level range is greater than 5 mAh/cm2 or the SOC is greater than 15, the electrode may be damaged and it is difficult to restore performance of the battery.

The bromine (Br2) has a low vapor pressure so it may be easily gasified to pass through the separation film, or it may be easily adsorbed to a flow frame or a pipe. It is preferable for the electrolyte solution of the zinc bromine (Br2) battery to include bromine (Br2) with equal to or greater than a predetermined concentration in the electrolyte solution.

In the case of the electrolyte solution of SOC=0, the concentration of bromine (Br2) in the electrolyte solution must be maintained to be equal to or greater than 0.05 M and equal to or less than 0.2 M. More preferably, the concentration of bromine (Br2) must be equal to or greater than 0.05 M and equal to or less than 0.12 M. When the concentration of bromine (Br2) is less than 0.05 M, bromine (Br2) is additionally provided. The bromine (Br2) may be additionally supplied so that its concentration may be equal to or greater than 0.05 M and equal to or less than 0.2 M.

A process for controlling driving of the chemical flow battery 100 will now be described based on the above-described configuration.

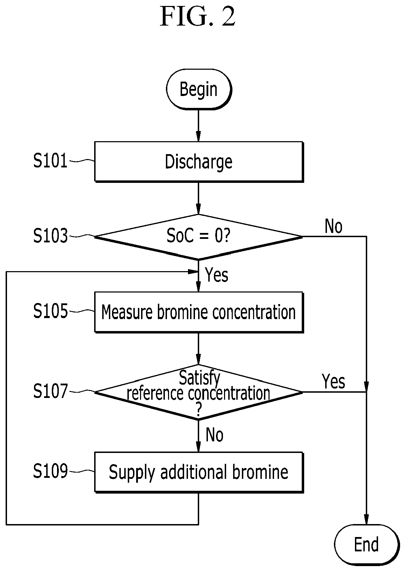

FIG. 2 shows a flowchart of a driving control method of a chemical flow battery according to an exemplary embodiment of the present invention.

Referring to FIG. 2, the driving control device 400 discharges the chemical flow battery 100 (S101), and determines whether its SOC is a complete discharge (i.e., SOC=0) (S103).

When it is completely discharged, the driving control device 400 measures the concentration of bromine (Br2) (S105) to determine whether it satisfies a predefined condition (S107).

When not satisfied, bromine (Br2) is additionally supplied into the electrolyte solution of the chemical flow battery 100 (S109). In this instance, the bromine (Br2) may be supplied by using a device in which a positive electrolyte tank is connected to a negative electrolyte tank through a valve.

Here, the driving control device 400 additionally supplies bromine (Br2) into the electrolyte solution until the concentration of bromine (Br2) satisfies the predefined condition, for example, until the concentration of bromine (Br2) becomes to be equal to or greater than 0.05 M and equal to or less than 0.2 M.

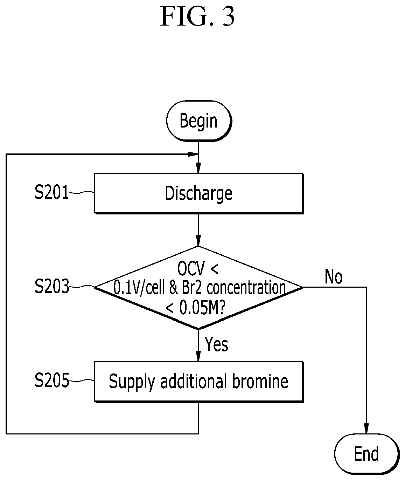

FIG. 3 shows a flowchart of a driving control method of a chemical flow battery according to another exemplary embodiment of the present invention.

Referring to FIG. 3, the driving control device 400, after the chemical flow battery 100 is discharged (S201), determines whether the open circuit voltage (OCV) in the electrolyte solution is 0.1 V/cell and the concentration of bromine (Br2) is less than 0.05 M (S203). When the open circuit voltage (OCV) is less than 0.1 V/cell and the concentration of bromine (Br2) is less than 0.05 M, the driving control device 400 additionally provides bromine (Br2) into the electrolyte solution (S205).

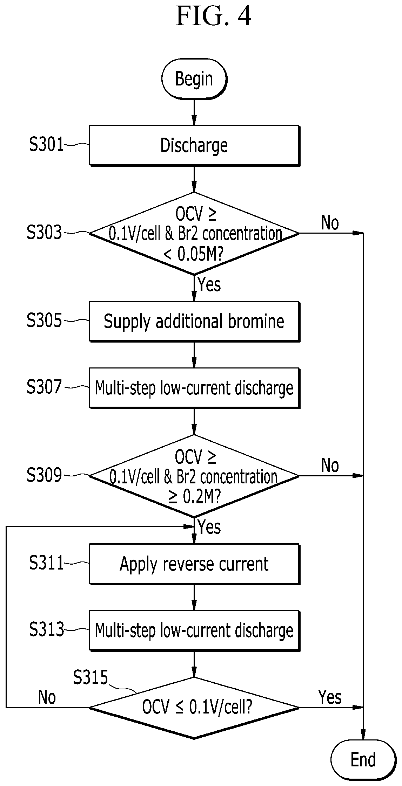

FIG. 4 shows a flowchart of a driving control method of a chemical flow battery according to the other exemplary embodiment of the present invention.

Referring to FIG. 4, the driving control device 400, after the discharging (S301), additionally supplies bromine (Br2) to the electrolyte solution (S305) when the open circuit voltage (OCV) in the electrolyte solution of the chemical flow battery 100 is equal to or greater than 0.1 V/cell and the concentration of bromine (Br2) is less than 0.05 M (S303).

The driving control device 400 performs multi-step low-current discharging on the chemical flow battery 100 (S307). Here, the current level range of the multi-step low-current discharging may be set to be equal to or greater than 0.1 % and equal to or less than 50 % of the charging and discharging current range.

The driving control device 400 applies a reverse current to the chemical flow battery 100 (S311) when the open circuit voltage (OCV) of the electrolyte solution of the chemical flow battery 100 is equal to or greater than 0.1 V/cell and the concentration of bromine (Br2) is equal to or greater than 0.2 M (S309).

In this instance, the reverse current may be applied so that the current level range may be equal to or greater than 1 mAh/cm2 and equal to or less than 5 mAh/cm2 and the state of charge (SOC) may be equal to or greater than 5 and equal to or less than 15.

After applying a reverse current (S311), the driving control device 400 performs multi-step low-current discharging on the chemical flow battery 100 (S313). When the open circuit voltage (OCV) of the electrolyte solution of the chemical flow battery 100 is not equal to or less than 0.1 V/cell, the step starts again from S311.

When the same is equal to or less than 0.1 V/cell, the step ends.

When the steps S303 and S309 are not satisfied, the step ends.

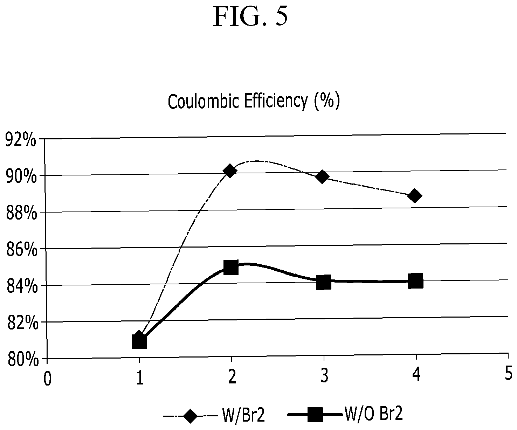

FIG. 5 shows a graph of estimation of performance of a battery depending on whether bromine (Br2) is provided in an electrolyte solution according to an exemplary embodiment of the present invention.

Here, W/Br2 stands for with Br2, meaning inclusion of bromine (Br2), and W/O Br2 stands for without Br2, meaning no inclusion of bromine (Br2).

Referring to FIG. 5, a reaction speed of the cathode of the zinc-bromine (Zn-Br2) battery is slower than a reaction speed of the anode. The bromine (Br2) produced after charging may possibly be self-discharged, so bromine (Br2) is added so as to consume the zinc remaining in the anode after a discharging.

When coulombic efficiency (CE) of the battery according to whether bromine (Br2) is provided or not is compared, initial coulombic efficiency shows the same efficiency regardless of whether bromine (Br2) is provided, but it is found in the next cycle that coulombic efficiency of the electrolyte solution including bromine (Br2) is higher.

It is confirmed through the above-noted experiment that the electrolyte solution including bromine (Br2) discharges the zinc remaining in the anode to provide an electrode surface on which zinc may uniformly grow in the cycle, thereby increasing efficiency.

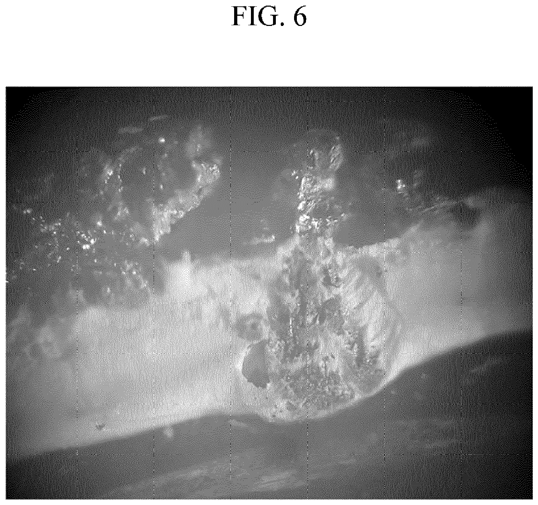

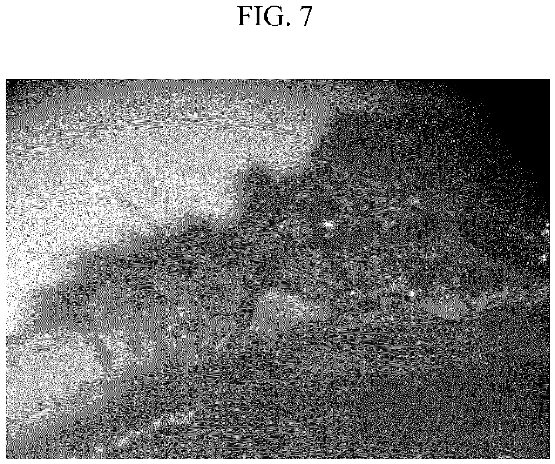

FIG. 6 and FIG. 7 show microscope photographs of after charging and discharging by use of an electrolyte solution without bromine (Br2) according to an exemplary embodiment of the present invention.

Referring to FIG. 6 and FIG. 7, when charging and discharging are maintained for more than 50 cycles by using the electrolyte solution without bromine (Br2), the formation of a zinc dendrite may be found from a microscope photograph. It is found that the zinc dendrite has damaged the separation film to deteriorate the long-term performance of the battery.

Bromine (Br2) is additionally supplied so as to maintain the concentration to be equal to or greater than 0.05 M and equal to or less than 0.2 M.

Regarding a next example and a comparative example, the charging and discharging cycle is performed in a constant current mode, and after the discharging is finished, the open circuit voltage (OCV) and the concentration of bromine (Br2) are measured to perform a test of additionally supplying bromine (Br2) and compare performance.

### 1) Example 1: When it is given that the open circuit voltage (OCV) < 0.1 V/cell, and the concentration of bromine (Br2) is less than 0.05 M after a discharging.

**(Table 1)**

| Cycle | Charging capacity (Ah/cell) | Discharging capacity (Ah/cell) | Energy efficiency (%) | Coulombic efficiency (%) | OCV (V/cell) after discharging | Concentration (M) of Br2 after discharging |
|---|---|---|---|---|---|---|
| 1-4 | 2.98 | 2.66 | 71.2 | 89.1 | 0.004 | 0.04 |
| 5-8 | 2.98 | 2.67 | 72.1 | 89.7 | 0.003 | 0.02 |

| Additionally supply bromine | | | | | | |
|---|---|---|---|---|---|---|
| 9-12 | 2.98 | 2.69 | 72.1 | 90.2 | 0.006 | 0.12 |
| 13-16 | 2.98 | 2.69 | 71.7 | 90.4 | 0.007 | 0.10 |

As expressed in Table 1, the concentration of bromine (Br2) may be determined by eye. The electrolyte solution without bromine (Br2) is colorless, and as the amount of bromine (Br2) increases, the color progresses to orange and dark red from yellow.

When the concentration of bromine (Br2) is less than 0.05 M, the electrolyte solution has very much less bromine (Br2) so the electrolyte solution is very much colorless.

When it is given that the open circuit voltage (OCV) < 0.1 V/cell after discharging, it represents a state in which no reaction residue remains in the anode and the cathode, signifying that zinc may uniformly grow in the next cycle. However, an influence caused by whether there is bromine (Br2) is not found in the initial cycle during which the concentration of bromine (Br2) in the electrolyte solution is very much less, and in the long-term cycle, when there is no bromine (Br2), a zinc dendrite is formed and the separation film and the electrode may be damaged. It is advantageous to maintain the concentration of bromine (Br2) to sustain the long-term cycle.

### 2) Example 2: When it is given that the open circuit voltage (OCV) ≥ 0.1V /cell, and the concentration of bromine (Br2) is less than 0.05 M after a discharging.

**(Table 2)**

| Cycle | Charging capacity (Ah/cell) | Discharging capacity (Ah/cell) | Energy efficiency (%) | Coulombic efficiency (%) | OCV (V/cell) after discharging | Concentrati on (M) of Br2 after discharging |
|---|---|---|---|---|---|---|
| 1-4 | 2.98 | 2.57 | 68.0 | 86.2 | 0.95 | 0.009 |
| 5-8 | 2.98 | 2.56 | 67.7 | 86.0 | 1.10 | 0.004 |

| Additionally supply bromine, and stripping | | | | | | |
|---|---|---|---|---|---|---|
| 9-12 | 2.98 | 2.73 | 72.2 | 91.5 | 0.010 | 0.12 |
| 13-16 | 2.98 | 2.76 | 73.1 | 92.7 | 0.008 | 0.11 |

The case in which the concentration of bromine (Br2) is less than 0.05 M and the open circuit voltage (OCV) is equal to or greater than 0.1 V/cell represents that no cathode reaction material remains and a zinc reaction material remains in the anode. In this case, when bromine (Br2) is additionally supplied, self-discharge is induced, and stripping is performed, the open circuit voltage (OCV) may be reduced to be less than 0.1 V/cell. The concentration of bromine (Br2) of the anode and cathode electrolyte solution is measured and the bromine (Br2) is additionally supplied so as to maintain the concentration to be equal to or greater than 0.05 M and equal to or less than 0.2 M.

### 3) Example 3: When it is given that the open circuit voltage (OCV) ≥ 0.1 V/cell, and the concentration of bromine (Br2) is less than 0.05 M after discharging.

**(Table 3)**

| Cycle | Charging capacity (Ah/cell) | Discharging capacity (Ah/cell) | Energy efficiency (%) | Coulombic efficiency (%) | OCV (V/cell) after discharging | Concentratio n (M) of Br2 after discharging |
|---|---|---|---|---|---|---|
| 1-4 | 2.98 | 2.60 | 69.2 | 87.3 | 1.12 | 0.21 |
| 5-8 | 2.98 | 2.62 | 69.4 | 87.8 | 1.08 | 0.22 |

| Applying reverse current | | | | | | |
|---|---|---|---|---|---|---|
| 9-12 | 2.98 | 2.65 | 72.1 | 88.8 | 0.075 | 0.12 |
| 13-16 | 2.98 | 2.66 | 71.8 | 89.3 | 0.003 | 0.08 |

The case in which the concentration of bromine (Br2) is greater than 0.2 M and the open circuit voltage (OCV) is equal to or greater than 0.1 V/cell represents that no anode reaction material remains and a reaction material remains in the cathode activation layer. The above-noted case represents that the open circuit voltage (OCV) is not reduced to be less than 0.1 V/cell after performing stripping and additionally supplying bromine, and to solve this, the method for applying a reverse current may be used. It is preferable, when a reverse current is applied, to maintain the current level range to be equal to or greater than 1 mAh/cm2 and equal to or less than 5 mAh/cm2, and the SOC to be equal to or greater than 5 and equal to or less than 15. When digressing from the range, the electrode is damaged and it is difficult to restore performance of the electrode. Applying of a reverse current produces an effect when the efficiency is deteriorated by less than 10 % of the initial efficiency.

The above-described embodiments can be realized through a program for realizing functions corresponding to the configuration of the embodiments or a recording medium for recording the program in addition to through the above-described device and/or method, which is easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method for controlling driving of a chemical flow battery, comprising:
measuring a concentration of bromine (Br2) in an electrolyte solution of a chemical flow battery after a complete discharge; and
additionally supplying bromine (Br2) into the electrolyte solution until the concentration of bromine (Br2) satisfies a predefined condition.

2. The method of claim 1, wherein
the supplying includes
additionally supplying the bromine (Br2) until the concentration of bromine (Br2) becomes to be equal to or greater than 0.05 M and equal to or less than 0.2 M.

3. The method of claim 1, wherein
the chemical flow battery includes a zinc-bromine (Br2) redox flow battery.

4. A method for controlling driving of a chemical flow battery, comprising:
measuring an open circuit voltage (OCV) of an electrolyte solution of a chemical flow battery after discharging;
measuring a concentration of bromine (Br2) in the electrolyte solution; and
additionally supplying bromine (Br2) into the electrolyte solution when the open circuit voltage (OCV) is less than a predefined voltage reference value and the concentration of bromine (Br2) is less than a predefined concentration reference value.

5. The method of claim 4, wherein
the supplying includes
additionally supplying the bromine (Br2) when the open circuit voltage (OCV) is less than 0.1 V/cell and the concentration of bromine (Br2) is less than 0.05 M.

6. A method for controlling driving of a chemical flow battery, comprising:
measuring an open circuit voltage (OCV) of an electrolyte solution of a chemical flow battery after discharging;
measuring a concentration of bromine (Br2) in the electrolyte solution; and
additionally supplying bromine (Br2) into the electrolyte solution when the open circuit voltage (OCV) is equal to or greater than a predefined voltage reference value and the concentration of bromine (Br2) is less than a concentration reference value.

7. The method of claim 6, wherein
the supplying includes
additionally supplying the bromine (Br2) when the open circuit voltage (OCV) is equal to or greater than 0.1 V/cell and the concentration of bromine (Br2) is less than 0.05 M.

8. The method of claim 6, further comprising,
after the supplying:
performing multi-step low-current discharging;
measuring an open circuit voltage (OCV) of an electrolyte solution of the chemical flow battery;
measuring a concentration of bromine (Br2) in the electrolyte solution; and
applying a reverse current when the open circuit voltage (OCV) is equal to or greater than a predefined voltage reference value and the concentration of bromine (Br2) is equal to or greater than a predefined concentration reference value.

9. The method of claim 8, wherein
the applying of a reverse current includes
applying the reverse current when the open circuit voltage (OCV) is equal to or greater than 0.1 V/cell and the concentration of bromine (Br2) is equal to or greater than 0.2 M.

10. The method of claim 8, further comprising,
after the applying of a reverse current:
performing multi-step low-current discharging;
measuring an open circuit voltage (OCV) in an electrolyte solution of the chemical flow battery;
determining whether the open circuit voltage (OCV) is equal to or less than a predefined voltage reference value;
performing the applying of a reverse current when the open circuit voltage (OCV) is not equal to or less than the predefined voltage reference value; and
finishing the step when the open circuit voltage (OCV) is equal to or less than the predefined voltage reference value.

11. The method of claim 10, wherein
the determining whether the open circuit voltage (OCV) is equal to or less than a predefined voltage reference value includes determining whether the open circuit voltage (OCV) is equal to or less than 0.1 V/cell.

12. The method of claim 10, wherein
the performing of multi-step current discharging includes
establishing a current level range of the multi-step low-current discharge to be equal to or greater than 0.1 % and equal to or less than 50 % of a charging and discharging current range.

13. The method of claim 10, wherein
the applying of a reverse current includes
applying a reverse current so that a current level range may be equal to or greater than 1 mAh/cm2 and equal to or less than 5 mAh/cm2 and a state of charge (SOC) may be equal to or greater than 5 and equal to or less than 15.

14. The method of claim 10, wherein
the chemical flow battery includes a zinc-bromine (Br2) redox flow battery.
